# EUROPEAN PATENT SPECIFICATION

(11) **EP 1 650 414 B1**
(45) Date of publication and mention of the grant of the patent: **14.02.2007**
(21) Application number: 05022884.0
(22) Date of filing: 20.10.2005
(51) Int. Cl.: F01N 3/023, F01N 9/00, F02D 41/02, F02D 41/12

(54) **Exhaust gas control apparatus for internal combustion engine**
Abgassteuerungsvorrichtung für Brennkraftmaschine
Dispositif de contrôle de gas d'échappement pour moteur à combustion interne

(30) Priority: 22.10.2004 JP 2004308497
(43) Date of publication of application: 26.04.2006
(73) Proprietor: Toyota Jidosha Kabushiki Kaisha, Toyota-shi, Aichi-ken, 471-8571 (JP)
(72) Inventor: Kogo, Tomoyuki, Toyota-shi, Aichi-ken, 471-8571 (JP); Gotou, Isamu, Toyota-shi, Aichi-ken, 471-8571 (JP)
(74) Representative: TBK-Patent

(56) References cited:
- EP-A- 1 382 812
- EP-A- 1 426 591
- PATENT ABSTRACTS OF JAPAN vol. 2002, no. 08, 5 August 2002 (2002-08-05) & JP 2002 106325 A (TOYOTA MOTOR CORP), 10 April 2002 (2002-04-10)
- PATENT ABSTRACTS OF JAPAN vol. 2000, no. 06, 22 September 2000 (2000-09-22) & JP 2000 087736 A (MITSUBISHI MOTORS CORP), 28 March 2000 (2000-03-28)

## Description

### BACKGROUND OF THE INVENTION

### 1. Field of the Invention

The invention relates to an exhaust gas control apparatus for an internal combustion engine. More particularly, the invention relates to an exhaust gas control apparatus for an internal combustion engine, which includes a particulate filter that is provided in an exhaust passage of an internal combustion engine so as to capture particulate matter in exhaust gas.

### 2. Description of the Related Art

A technology is known, in which in an exhaust gas control apparatus for an internal combustion engine, which includes a particulate filter (hereinafter, referred to simply as "filter") that is provided in an exhaust passage of an internal combustion engine so as to capture particulate matter (hereinafter, referred to as "PM"), when an engine is decelerated while PM deposited in the filter is oxidized and removed by increasing a temperature of the filter, a decrease in a flow rate of exhaust gas flowing into the filter (hereinafter, referred to simply as "exhaust gas flow rate") is suppressed. An example of this technology is disclosed in European Patent Application Publication No. EP 1 382 812 A1.

Also, a technology is known, in which when a temperature of a filter becomes higher than a predetermined temperature, a control is performed such that an exhaust gas flow rate becomes lower than a first threshold value, or the exhaust gas flow rate becomes higher than a second threshold value that is higher than the first threshold value. An example of this technology is disclosed in Japanese Patent Application Publication No. JP 2002-106325 A. Also, Japanese Patent Publication No. 5-11205 relates to this technology.

In an exhaust gas control apparatus for an internal combustion engine, which includes a filter that is provided in an exhaust passage, a temperature increase control for increasing a temperature of the filter to a target temperature when a specific condition is satisfied.

When this temperature increase control is performed, the temperature of the filter may be increased to a temperature higher than the target temperature. In this case, when a vehicle is decelerated, since an amount of heat removed from the filter is decreased due to a decrease in the exhaust gas flow rate, the temperature of the filter may be further increased, and thus the temperature of the filter may be excessively increased. Therefore, in order to suppress an excessive increase in the temperature of the filter due to the decrease in the exhaust gas flow rate, the decrease in the exhaust gas flow rate may be suppressed.

However, in a case where the decrease in the exhaust gas flow rate is suppressed when the vehicle is decelerated, the temperature of the filter may be decreased to a temperature lower than the target temperature, though an excessive increase in the temperature of the filter can be suppressed. In this case, it may take much time to increase the temperature of the filter again to the target temperature. Also, in a case where the temperature increase control for the filter is performed by supplying fuel to a catalyst provided at a portion upstream of the filter in the exhaust passage, or a catalyst supported by the filter itself, fuel efficiency may be decreased or emission may be deteriorated.

### SUMMARY OF THE INVENTION

In view of the above, it is an object of the invention to provide a technology in which in an exhaust gas control apparatus for an internal combustion engine, which includes a particulate filter provided in an exhaust passage of an internal combustion engine, an unnecessary decrease in a temperature of the filter can be suppressed as much as possible while suppressing an excessive increase in the temperature of the particulate filter.

According to the invention, in an exhaust gas control apparatus for an internal combustion engine, which includes a particulate filter provided in an exhaust passage of an internal combustion engine, in a case where a vehicle is decelerated while a temperature of the particulate filter is high, only when the temperature of the particulate filter is likely to be excessively increased, a decrease in a flow rate of exhaust gas flowing into the particulate filter is suppressed. When the temperature of the particulate filter is not likely to be excessively increased, suppression of the decrease in the flow rate of the exhaust gas flowing into the particulate filter is prohibited.

More specifically, an aspect of the invention relates to an exhaust gas control apparatus for an internal combustion engine, which includes a particulate filter that is provided in an exhaust passage of an internal combustion engine so as to capture particulate matter in exhaust gas; filter temperature detection means for detecting a temperature of the particulate filter; deceleration detection means for detecting deceleration of a vehicle; and exhaust gas flow rate decrease suppression means for suppressing a decrease in a flow rate of exhaust gas flowing into the particulate filter. In the exhaust gas control apparatus, in a case where the deceleration detection means detects deceleration of the vehicle while the temperature of the particulate filter detected by the filter temperature detection means is higher than a reference temperature, when the temperature of the particulate filter has continued to be higher than the reference temperature for a reference period or longer, the decrease in the flow rate of the exhaust gas flowing into the particulate filter is suppressed by operating the exhaust gas flow rate decrease suppression means, and when the temperature of the particulate filter has continued to be higher than the reference temperature for a period shorter than the reference period, the exhaust gas flow rate decrease suppression means is prohibited from being operated.

Another aspect of the invention relates to an exhaust gas control method of an exhaust gas control apparatus for an internal combustion engine, which includes a particulate filter that is provided in an exhaust passage of an internal combustion engine so as to capture particulate matter in exhaust gas, the exhaust gas control method including the steps of detecting a temperature of the particulate filter; detecting deceleration of a vehicle; and suppressing a decrease in a flow rate of exhaust gas flowing into the particulate filter. In the exhaust gas control method, in a case where deceleration of the vehicle is detected while the temperature of the particulate filter is higher than a reference temperature, when the temperature of the particulate filter has continued to be higher than the reference temperature for a reference period or longer, the decrease in the flow rate of the exhaust gas flowing into the particulate filter is suppressed, and when the temperature of the particulate filter has continued to be higher than the reference temperature for a period shorter than the reference period, suppression of the decrease in the flow rate of the exhaust gas flowing into the particulate filter is prohibited.

As described above, in the case where the vehicle is decelerated while the temperature of the particulate filter is somewhat high, the temperature of the particulate filter may be further increased, and may be excessively increased. However, in the case where the temperature of the particulate filter is somewhat high for a temporal reason, even if the vehicle is decelerated while the temperature of the particulate filter is somewhat high, the temperature of the particulate filter is decreased quickly. Therefore, the temperature of the particulate filter is not likely to be excessively increased.

Accordingly, in the invention, in the case where the vehicle is decelerated while the temperature of the particulate filter is higher than the reference temperature, only when the temperature of the particulate filter has continued to be higher than the reference temperature for the reference period or longer, the decrease in the flow rate of the exhaust gas is suppressed. When the temperature of the particulate filter has continued to be higher than the reference temperature for a period shorter than the reference period, even if the vehicle is decelerated when the temperature of the particulate filter is higher than the reference temperature, suppression of the decrease in the flow rate of the exhaust gas is prohibited.

The reference temperature is a temperature that is set in advance. The reference temperature is lower than a temperature based on which it can be determined that the temperature of the particulate filter is excessively increased. An example of the reference temperature is a target temperature that is employed when the particulate matter deposited in the particulate filter is oxidized and removed. The phrase "the temperature of the particulate filter is excessively increased" signifies that the temperature of the particulate filter is increased to a temperature at which melting of the particulate filter, damage to the particulate filter, and the like occur.

The reference period is a threshold value. In the case where the vehicle is decelerated while the temperature of the particulate filter is higher than the reference temperature, when the temperature of the particulate filter has continued to be higher than the reference temperature for the reference period or longer, it can be determined that the temperature of the particulate filter is likely to be excessively increased. In other words, in the case where the vehicle is decelerated while the temperature of the particulate filter is higher than the reference temperature, when the temperature of the particulate filter has continued to be higher than the reference temperature for a period shorter than the reference period, it can be determined that the temperature of the particulate filter is not likely to be excessively increased.

That is, in the aforementioned exhaust gas control apparatus and exhaust gas control method for an internal combustion engine, only when the temperature of the particulate filter is likely to be excessively increased, the decrease in the flow rate of the exhaust gas is suppressed. When the temperature of the particulate filter is not likely to be excessively increased, suppression of the decrease in the flow rate of the exhaust gas is prohibited. By prohibiting suppression of the decrease in the flow rate of the exhaust gas, the decrease in the temperature of the particulate filter can be suppressed.

Accordingly, with the aforementioned exhaust gas control apparatus and exhaust gas control method for an internal combustion engine, it is possible to suppress an unnecessary decrease in the temperature of the particulate filter as much as possible while suppressing an excessive increase in the temperature of the particulate filter.

Also, in the aforementioned exhaust gas control apparatus and exhaust gas control method for an internal combustion engine, when the exhaust gas control apparatus further includes particulate matter deposition amount detection means for detecting an amount of particulate matter deposited in the particulate filter, the reference period may be set to be shorter, as the amount of the particulate matter deposited in the particulate filter detected by the particulate matter deposition amount detection means becomes larger when the temperature of the particulate filter exceeds the reference temperature.

As the amount of the particulate matter deposited in the particulate filter becomes larger, the temperature of the particulate filter is more likely to be increased when the flow rate of the exhaust gas is decreased. Therefore, even when the temperature of the particulate filter has continued to be higher than the reference temperature for a short period, the temperature of the particulate filter is likely to be excessively increased.

As described above, since the reference period is set to be shorter, as the amount of the particulate matter deposited in the particulate filter becomes larger when the temperature of the particulate filter exceeds the reference temperature, an excessive increase in the temperature of the particulate filter can be suppressed.

In a case where the amount of the particulate matter deposited in the particulate filter is somewhat large, even if the vehicle is decelerated immediately after the temperature of the particulate filter exceeds the reference temperature, the decrease in the flow rate of the exhaust gas may be suppressed substantially simultaneously with deceleration of the vehicle.

Also, in the exhaust gas control apparatus and exhaust gas control method, the reference period may be set to be shorter, as the temperature of the particulate filter becomes higher when the temperature of the particulate filter exceeds the reference temperature.

This control is performed for the following reason. In the case where the temperature of the particulate filter is higher than the reference temperature, as the temperature of the particulate filter becomes higher, the temperature of the particulate filter is more likely to be excessively increased even when the temperature of the particulate filter has continued to be higher than the reference temperature for a short period.

As described above, since the reference period is set to be shorter as the temperature of the particulate filter becomes higher when the temperature of the particulate filter exceeds the reference temperature, an excessive increase in the temperature of the particulate filter can be suppressed more effectively.

According to the invention, with the aforementioned exhaust gas control apparatus for an internal combustion engine, which includes a particulate filter provided in an exhaust passage of an internal combustion engine, and the aforementioned exhaust gas control method thoereof, it is possible to suppress an unnecessary decrease in the temperature of the particulate filter as much as possible, while suppressing an excessive increase in the temperature of the particulate filter.

### BRIEF DESCRIPTION OF THE DRAWINGS

The features, advantages thereof, and technical and industrial significance of this invention will be better understood by reading the following detailed description of exemplary embodiments of the invention, when considered in connection with the accompanying drawings, in which:
FIG. 1 is a diagram showing an outline of a configuration of an internal combustion engine and an intake/exhaust system thereof according to an embodiment of the invention; and
FIG. 2 is a flowchart showing a filter excessive temperature increase suppression control routine according to the embodiment of the invention.

### DETAILED DESCR1PTION OF THE EXEMPLARY EMBODIMENTS

In the following description and the accompanying drawings, the present invention will be described in more detail in terms of exemplary embodiments.

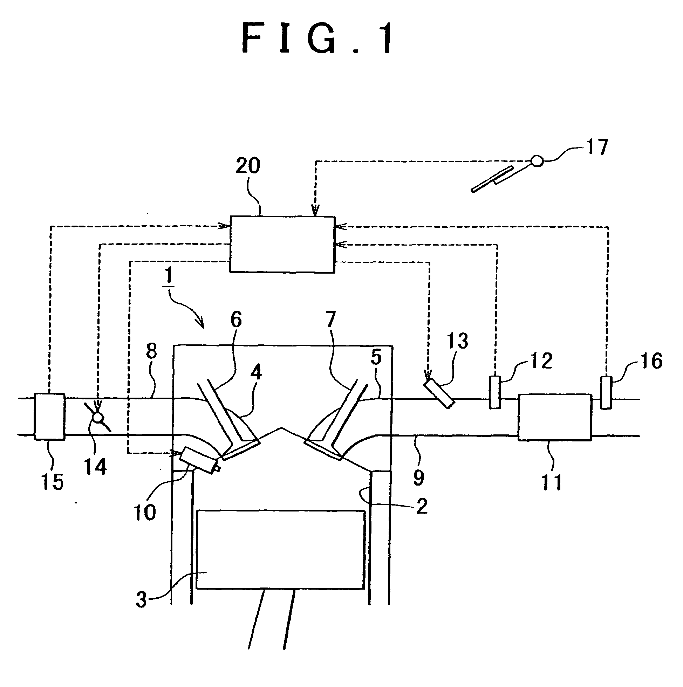

Hereinafter, a first embodiment of the invention will be described. First, description will be made of an outline of a configuration of an internal combustion engine and an intake/exhaust system thereof. FIG. 1 is a diagram showing the outline of the configuration of the internal combustion engine and the intake/exhaust system thereof. An internal combustion engine 1 is a diesel engine for driving a vehicle. In a cylinder 2 of the internal combustion engine 1, a piston 3 is provided so as to be slidable. A combustion chamber in an upper portion of the cylinder 2 is connected to an intake port 4 and an exhaust port 5. An opening portion of the intake port 4 is opened/closed to the combustion chamber by an intake valve 6. An opening portion of the exhaust port 4 is opened/closed to the combustion chamber by an exhaust valve 7. The intake port 4 is connected to an intake passage 8. The exhaust passage 9 is connected to an exhaust passage 9. The cylinder 2 is provided with a fuel injection valve 10 that directly injects fuel into the cylinder 2.

In the intake passage 8, an air flow meter 15 and a throttle valve 14 that controls an intake air amount are provided. In the exhaust passage 9, a filter 11 that captures PM in exhaust gas is provided. This filter 11 supports an oxidation catalyst. A fuel supply valve 13 that supplies fuel into exhaust gas is provided at a portion upstream of the filter 11 in the exhaust passage 9. An upstream-side exhaust gas temperature sensor 12 is provided at a portion downstream of the fuel supply valve 13 and upstream of the filter 11 in the exhaust passage 9. A downstream-side exhaust gas temperature sensor 16 is provided at a portion downstream of the filter 11 in the exhaust passage 9. Each of the upstream-side exhaust gas temperature sensor 12 and the downstream-side exhaust gas temperature sensor 16 outputs an electric signal corresponding to a temperature of exhaust gas.

The catalyst supported by the filter 11 has an oxidizing function. For example, a NOx storage reduction catalyst may be used. Also, the filter 11 itself may not support a catalyst, and a catalyst may be provided at a portion upstream of the filter 11 in the exhaust passage 9. In this case, the fuel supply valve 13 is provided at a portion upstream of the catalyst. Also, in this case, an exhaust gas temperature sensor may be provided between the catalyst and the filter 11.

An ECU 20 that controls the internal combustion engine 1 is provided for the internal combustion engine 1 thus configured. The ECU 20 is connected to various sensors such as the air flow meter 15, the upstream-side exhaust gas temperature sensor 12, the downstream-side exhaust gas temperature sensor 16, and an accelerator pedal operation amount sensor 17 through electric wiring. The accelerator pedal operation amount sensor 17 outputs an electric signal corresponding to an accelerator pedal operation amount. Output signals from these sensors are input to the ECU 20. The ECU 20 estimates a temperature of the filter 11 based on a value detected by the downstream-side exhaust gas temperature sensor 16. Also, the ECU 20 is electrically connected to the fuel injection valve 10, the throttle valve 14, and the fuel supply valve 13 that are controlled by the ECU 20.

Next, a filter recovery control according to the embodiment will be described. Description will be made of a filter recovery control that is performed when the PM deposited in the filter 11 is oxidized and removed in the embodiment. When the filter recover control according to the embodiment is performed, fuel is supplied into the exhaust gas from the fuel supply valve 13. When the fuel is supplied to the oxidation catalyst supported by the filter 11 and the fuel is oxidized by the oxidation catalyst, oxidation heat is generated, and the temperature of the filter 11 is increased by the oxidation heat. Thus, the PM deposited in the filter 11 is oxidized and removed.

At this time, the amount of the fuel supplied from the fuel supply valve 13 is controlled such that the temperature of the filter 11 becomes equal to a predetermined target temperature Tf0 (for example, 600 °C) at which the PM can be oxidized.

The filter recovery control may be performed when an amount of the PM deposited in the filter 11 becomes equal to or larger than a prescribed amount. Also, the filter recovery control may be performed at predetermined recovery performance time intervals or at predetermined recovery performance distance intervals. Also, instead of supplying fuel from the fuel supply valve 13, the fuel injection valve 10 may perform sub fuel injection after main fuel injection in the cylinder 2 so that the fuel is supplied to the oxidation catalyst supported by the filter 11.

Next, description will be made of an excessive temperature increase suppression control that is performed when the filter recovery control is performed. When the filter recovery control is performed, the amount of the fuel supplied from the fuel supply valve 13 is controlled so that the temperature of the filter 11 becomes equal to the target temperature Tf0, based on the intake air amount detected by the air flow meter 15 and the exhaust gas temperature detected by the upstream-side exhaust gas temperature sensor 12.

However, for example, when the intake air amount and the exhaust gas temperature are sharply changed, and the amount of the fuel supplied from the fuel supply valve 13 with respect to the intake air amount and the exhaust gas temperature is deviated from the obtained value, the temperature of the filter 11 may become higher than the target temperature Tf0 while the filter recovery control is being performed.

In the case where the vehicle is decelerated while the temperature of the filter 11 is higher than the target temperature Tf0, since an amount of heat removed from the filter 11 is decreased due to a decrease in an exhaust gas flow rate, the temperature of the filter is further increased.

In the case where the vehicle is decelerated while the temperature of the filter 11 is higher than the target temperature Tf0, and therefore the temperature of the filter 11 is further increased, it is necessary to suppress an excessive increase in the temperature of the filter 11 by performing a control that suppress the decrease in the exhaust gas flow rate due to deceleration of the vehicle (hereinafter, referred to as "exhaust gas flow rate decrease suppression control"). However, in the case where the temperature of the filter 11 is higher than the target temperature Tf0 for a temporal reason before the vehicle is decelerated, even if the vehicle is decelerated when the temperature of the filter 11 is higher than the target temperature Tf0, the temperature of the filter 11 is decreased quickly. Therefore, the temperature of the filter 11 is not likely to be excessively increased.

Further, in the case where the temperature of the filter 11 is not likely to be excessively increased even if the exhaust gas flow rate is decreased during deceleration of the vehicle, if the decrease in the exhaust gas flow rate is suppressed, the temperature of the filter 11 may be decreased to a temperature lower than the target temperature Tf0.

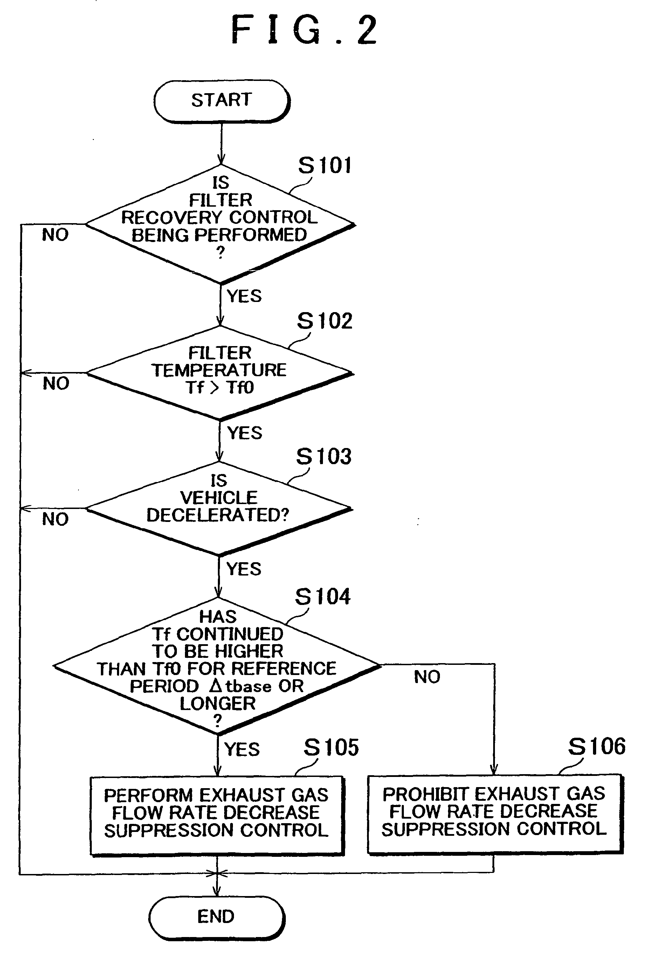

Accordingly, in the embodiment, the filter excessive temperature increase suppression control shown in FIG. 2 is performed. FIG 2 is a flowchart showing the filter excessive temperature increase suppression control routine according to the embodiment. This routine is stored in the ECU 20 in advance. This routine is performed at every prescribed crank angle while the internal combustion engine 1 is operated.

In this routine, first, in step S101, the ECU 20 determines whether the filter recovery control is being performed. When an affirmative determination is made in step S101, the ECU 20 performs step S102. When a negative determination is made in step S101, the ECU 20 finishes the routine.

In step S102, the ECU 20 determines whether a temperature Tf of the filter 11 is higher than the target temperature Tf0 in the filter recovery control. When an affirmative determination is made in step S102, the ECU 20 performs step S103. When a negative determination is made in step S102, the ECU 20 finishes the routine.

In step S103, the ECU 20 determines whether the vehicle including the internal combustion engine 1 is decelerated, based on values output from the accelerator pedal operation amount sensor 17 and the like. When an affirmative determination is made in step S103, the ECU 20 performs step S 104. When a negative determination is made in step S103, the ECU 20 finishes the routine.

In step S104, the ECU 20 determines whether the temperature Tf of the filter 11 has continued to be higher than the target temperature Tf0 for a reference period Δtbase or longer. The reference period Δtbase is a threshold value. In the case where the vehicle is decelerated while the temperature Tf of the filter 11 is higher than the target temperature Tf0, when the temperature Tf of the filter 11 has continued to be higher than the target temperature Tf0 for the reference period Δtbase or longer, it can be determined that the temperature of the filter 11 is likely to be excessively increased. In other words, in the case where the vehicle is decelerated while the temperature Tf of the filter 11 is higher than the target temperature Tf0, when the temperature Tf of the filter 11 has continued to be higher than the target temperature Tf0 for a period shorter than the reference period Δtbase, it can be determined that the temperature of the filter 11 is not likely to be excessively increased. In the embodiment, the reference period Δtbase is a value that is set in advance through experiment or the like (for example, 2 to 3 seconds). When an affirmative determination is made in step S 104, the ECU 20 performs step S 105. When a negative determination is made in step S 104, the ECU 20 performs step S 106.

In step S105, the ECU 20 performs the exhaust gas flow rate decrease suppression control in order to suppress an excessive increase in the temperature of the filter 11. The exhaust gas flow rate decrease suppression control is performed at a time when a period during which the temperature Tf of the filter 11 has continued to be higher than the target temperature Tf0 has become equal to the reference period Δtbase, or immediately after a period during which the temperature Tf of the filter I has continued to be higher than the target temperature Tf0 has become longer than the reference period Δtbase. The decrease in the exhaust gas flow rate is suppressed, for example, by controlling an engine rotational speed by controlling an opening amount of the throttle valve 14, or changing a gear ratio.

Meanwhile, in step S106, the ECU 20 prohibits the exhaust gas flow rate decrease suppression control from being performed. Then, the ECU 20 finishes the routine.

According to the control routine that has been described, in the case where the vehicle is decelerated while the filter recovery control is being performed and the temperature Tf of the filter 11 is higher than the target temperature Tf0, only when the temperature Tf of the filter 11 has continued to be higher than the target temperature Tf0 for the reference period Δtbase or longer, that is, only when the temperature of the filter 11 is likely to be excessively increased, the decrease in the exhaust gas flow rate is suppressed. When the temperature Tf of the filter 11 has continued to be higher than the target temperature Tf0 for a period shorter than the reference period Δtbase, that is, the temperature of the filter 11 is not likely to be excessively increased, suppression of the decrease in the exhaust gas flow rate is prohibited.

Thus, according to the embodiment, it is possible to suppress an unnecessary decrease in the temperature of the filter 11 as much as possible while suppressing an excessive increase in the temperature of the filter 11. Also, since the unnecessary decrease in the temperature of the filter 11 can be suppressed as much as possible, fuel supply from the fuel supply valve 13 can be suppressed. As a result, a decrease in fuel efficiency and deterioration of emission can be suppressed.

Next, a first modified example of the first embodiment will be described. In the control routine that has been described, the reference period Δtbase is a value that is set in advance. In this embodiment, however, the reference period Δtbase may be set to be shorter, as the amount of the PM deposited in the filter 11 becomes larger when the temperature Tf of the filter 11 exceeds the target temperature Tf0 while the filter recovery control is being performed.

This control is performed for the following reason. As the amount of the PM deposited in the filter 11 becomes larger, the temperature of the filter 11 is more likely to be increased when the exhaust gas flow rate is decreased. Therefore, even when the temperature Tf of the filter 11 has continued to be higher than the target temperature Tf0 for a short period, the temperature of the filter 11 is likely to be excessively increased.

Since the reference period Δtbase is set to be shorter, as the amount of the PM deposited in the filter 11 becomes larger when the temperature Tf of the filter 11 exceeds the target temperature Tf0 as described above, it is possible to suppress an excessive increase in the temperature of the filter 11.

The amount of the PM deposited in the filter 11 at a time when the temperature Tf of the filter 11 exceeds the target temperature Tf0 is estimated based on the amount of the PM deposited in the filter 11 at a time when the filter recovery control is started, an elapsed time since the filter recovery control is started, and the like. Also, a pressure difference sensor may be provided for detecting a pressure difference between an upstream side and a downstream side of the filter 11 in the exhaust passage 9, and the amount of the PM deposited in the filter 11 may be estimated based on the value detected by the pressure difference sensor.

Next, a second modified example of the first embodiment will be described. In this embodiment, the reference period Δtbase may be set to be shorter, as the temperature Tf of the filter 11 becomes higher when the temperature Tf of the filter 11 exceeds the target temperature Tf0.

This control is performed for the following reason. In the case where the temperature Tf of the filter 11 is higher than the target temperature Tf0, as the temperature Tf of the filter 11 becomes higher, the temperature Tf of the filter 11 is more likely to be excessively increased even when the temperature Tf of the filter 11 has continued to be higher than the target temperature Tf0 for a short period.

Since the reference period Δtbase is set to be shorter, as the temperature Tf of the filter 11 becomes higher when the temperature Tf of the filter 11 exceeds the target temperature Tf0, it is possible to suppress an excessive increase in the temperature of the filter 11.

## Claims

1. An exhaust gas control apparatus for an internal combustion engine, which includes a particulate filter (11) that is provided in an exhaust passage (9) of an internal combustion engine (1) so as to capture particulate matter (PM) in exhaust gas; filter temperature detection means (16) for detecting a temperature (Tf) of the particulate filter (11); deceleration detection means for detecting deceleration of a vehicle; and exhaust gas flow rate decrease suppression means for suppressing a decrease in a flow rate of exhaust gas flowing into the particulate filter (11), **characterized in that**
in a case where the deceleration detection means detects deceleration of the vehicle while the temperature (Tf) of the particulate filter (11) detected by the filter temperature detection means (16) is higher than a reference temperature (Tf0), when the temperature (Tf) of the particulate filter (11) has continued to be higher than the reference temperature (Tf0) for a reference period (Δtbase) or longer, the decrease in the flow rate of the exhaust gas flowing into the particulate filter (11) is suppressed by operating the exhaust gas flow rate decrease suppression means, and when the temperature (Tf) of the particulate filter (11) has continued to be higher than the reference temperature (Tf0) for a period shorter than the reference period (Δtbase), the exhaust gas flow rate decrease suppression means is prohibited from being operated.

2. The exhaust gas control apparatus for an internal combustion engine according to claim 1, **characterized by** further comprising:
particulate matter deposition amount detection means for detecting an amount of particulate matter (PM) deposited in the particulate filter (11), wherein the reference period (Δtbase) is set to be shorter as the amount of the particulate matter (PM) deposited in the particulate filter (11) detected by the particulate matter deposition amount detection means becomes larger when the temperature (Tf) of the particulate filter (11) exceeds the reference temperature (Tf0)

3. The exhaust gas control apparatus for an internal combustion engine according to claim 1 or 2, **characterized in that** the reference period (Δtbase) is set to be shorter as the temperature (Tf) of the particulate filter (11) detected by the filter temperature detection means (16) becomes higher when the temperature (Tf) of the particulate filter (11) exceeds the reference temperature (Tf0).

4. An exhaust gas control method of an exhaust gas control apparatus for an internal combustion engine, which includes a particulate filter (11) that is provided in an exhaust passage (9) of an internal combustion engine (1) so as to capture particulate matter (PM) in exhaust gas, the exhaust gas control method including the steps of detecting a temperature (Tf) of the particulate filter (11); detecting deceleration of a vehicle; and suppressing a decrease in a flow rate of exhaust gas flowing into the particulate filter (11), **characterized in that**
in a case where deceleration of the vehicle is detected while the temperature (Tf) of the particulate filter (11) is higher than a reference temperature (Tf0), when the temperature (Tf) of the particulate filter (11) has continued to be higher than the reference temperature (Tf0) for a reference period (Δtbase) or longer, the decrease in the flow rate of the exhaust gas flowing into the particulate filter (11) is suppressed, and when the temperature (Tf) of the particulate filter (11) has continued to be higher than the reference temperature (Tf0) for a period shorter than the reference period (Δtbase), suppression of the decrease in the flow rate of the exhaust gas flowing into the particulate filter (11) is prohibited.

5. The exhaust gas control method of the exhaust gas control apparatus for an internal combustion engine according to claim 4, **characterized by** further comprising
a step of detecting an amount of particulate matter (PM) deposited in the particulate filter (11); and wherein
the reference period (Δtbase) is set to be shorter as the detected amount of the particulate matter (PM) deposited in the particulate filter (11) becomes larger when the temperature (Tf) of the particulate filter (11) exceeds the reference temperature (Tf0).

6. The exhaust gas control method of the exhaust gas control apparatus for an internal combustion engine according to claim 4 or 5, **characterized in that** the reference period (Δtbase) is set to be shorter as the temperature (Tf) of the particulate filter (11) becomes higher when the temperature (Tf) of the particulate filter (11) exceeds the reference temperature (Tf0).

## Patentansprüche

1. Abgassteuerungsgerät für eine Brennkraftmaschine, das folgendes aufweist:
einen Partikelfilter (11), der in einem Absaugdurchgang (9) einer Brennkraftmaschine (1) vorgesehen ist, um Partikel (PM) im Abgas einzufangen;
eine Filtertemperaturerfassungseinrichtung (16) zum Erfassen einer Temperatur (Tf) des Partikelfilters (11);
eine Verzögerungserfassungseinrichtung zum Erfassen einer Verzögerung eines Fahrzeugs; und
eine Abgasströmungsratenabnahmeunterdrückeinrichtung zum Unterdrücken einer Abnahme einer Strömungsrate von Abgas, das in den Partikelfilter (11) strömt;
**dadurch gekennzeichnet, dass**
die Abnahme der Strömungsrate des Abgases, das in den Partikelfilter (11) strömt, durch Betätigen der Abgasströmungsratenabnahmeunterdrückeinrichtung unterdrückt wird, in einem Fall, in dem die Verzögerungserfassungseinrichtung eine Verzögerung des Fahrzeugs erfasst, während die durch die Filtertemperaturerfassungseinrichtung (16) erfasste Temperatur (Tf) des Partikelfilters (11) höher als eine Bezugstemperatur (Tf0) ist, wenn die Temperatur (Tf) des Partikelfilters (11) für einen Bezugszeitraum (Δtbase) oder länger höher als die Bezugstemperatur (Tf0) gewesen ist, und verhindert wird, dass die Abgasströmungsratenabnahmeunterdrückeinrichtung betätigt wird, wenn die Temperatur (Tf) des Partikelfilters (11) für einen Zeitraum, kürzer als der Bezugszeitraum (Δtbase) ist, höher als die Bezugstemperatur (Tf0) gewesen ist.

2. Abgassteuerungsgerät für eine Brennkraftmaschine gemäß Anspruch 1,
**dadurch gekennzeichnet, dass** es ferner folgendes aufweist:
eine Partikelablagerungsmengenerfassungseinrichtung zum Erfassen einer Menge an in dem Partikelfilter (11) abgelagerten Partikeln (PM), wobei der Bezugszeitraum (Δtbase) kürzer festgesetzt wird, wenn die durch die Erfassungseinrichtung für eine Partikelablagerungsmenge erfasste Menge an in dem Partikelfilter (11) abgelagerten Partikeln (PM) größer wird, wenn die Temperatur (Tf) des Partikelfilters (11) die Bezugstemperatur (Tf0) übersteigt.

3. Abgassteuerungsgerät für eine Brennkraftmaschine gemäß Anspruch 1 oder 2,
**dadurch gekennzeichnet, dass**
der Bezugszeitraum (Δtbase) kürzer festgesetzt wird, wenn die durch die Filtertemperaturerfassungseinrichtung (16) erfasste Temperatur (Tf) des Partikelfilters (11) höher wird, wenn die Temperatur (Tf) des Partikelfilters (11) die Bezugstemperatur (Tf0) übersteigt.

4. Abgassteuerungsverfahren eines Abgassteuerungsgeräts für eine Brennkraftmaschine, das einen Partikelfilter (11) aufweist, der in einem Absaugdurchgang (9) einer Brennkraftmaschine (1) vorgesehen ist, um Partikel (PM) im Abgas einzufangen, wobei das Abgassteuerungsverfahren folgende Schritte aufweist:
Erfassen einer Temperatur (Tf) des Partikelfilters (11);
Erfassen einer Verzögerung eines Fahrzeugs; und
Unterdrücken einer Abnahme einer Strömungsrate von Abgas, das in den Partikelfilter (11) strömt;
**dadurch gekennzeichnet, dass**
die Abnahme der Strömungsrate des Abgases, das in den Partikelfilter (11) strömt, unterdrückt wird, in einem Fall, in dem eine Verzögerung des Fahrzeugs erfasst wird, während die Temperatur (Tf) des Partikelfilters (11) höher als eine Bezugstemperatur (Tf0) ist, wenn die Temperatur (Tf) des Partikelfilters (11) für einem Bezugszeitraum (Δtbase) oder länger höher als die Bezugstemperatur (Tf0) gewesen ist, und eine Unterdrückung der Abnahme der Strömungsrate des Abgases, das in den Partikelfilter (11) strömt, verhindert wird, wenn die Temperatur (Tf) des Partikelfilters (11) für einen Zeitraum, der kürzer als der Bezugszeitraum (Δtbase) ist, höher als die Bezugstemperatur (Tf0) gewesen ist.

5. Abgassteuerungsverfahren des Abgassteuerungsgeräts für eine Brennkraftmaschine gemäß Anspruch 4,
**dadurch gekennzeichnet, dass** es ferner folgendes aufweist:
einen Schritt des Erfassens einer Menge an in dem Partikelfilter (11) abgelagerten Partikeln (PM);
und wobei
der Bezugszeitraum (Δtbase) kürzer festgesetzt wird, wenn die erfasste Menge an in dem Partikelfilter (11) abgelagerten Partikel größer wird, wenn die Temperatur (Tf) des Partikelfilters (11) die Bezugstemperatur (Tf0) übersteigt.

6. Abgassteuerungsverfahren des Abgassteuerungsgeräts für eine Brennkraftmaschine gemäß Anspruch 4 und 5,
**dadurch gekennzeichnet, dass**
der Bezugszeitraum (Δtbase) kürzer festgesetzt wird, wenn die Temperatur (Tf) des Partikelfilters (11) höher wird, wenn die Temperatur (Tf) des Partikelfilters (11) die Bezugstemperatur (Tf0) übersteigt.

## Revendications

1. Dispositif de maîtrise des gaz d'échappement destiné à un moteur à combustion interne, lequel comprend un filtre à particules (11) qui est disposé dans un conduit d'échappement (9) d'un moteur à combustion interne (1) de façon à capturer une matière particulaire (PM) dans un gaz d'échappement, à moins de détection de température de filtre (16) définit à détecter une température (Tf) du filtre à particules (11), un moyen de détection de décélération destiné à détecter la décélération d'un véhicule, et un moyen de réduction de diminution de débit de gaz d'échappement destiné à réduire une diminution du débit du gaz d'échappement circulant dans le filtre à particules (11),
**caractérisé en ce que**
dans le cas où le moyen de détection de décélération détecte la décélération du véhicule tandis que la température (Tf) du filtre à particules (11) détectée par le moyen de détection de température de filtre (16) est supérieure à une température de référence (Tf0), lorsque la température (Tf) du filtre à particules (11) reste supérieure à la température de référence (Tf0) pendant une période de référence (Δtbase) ou plus, la diminution du débit de gaz d'échappement circulant dans le filtre à particules (11) est réduite en mettant en oeuvre le moyen de réduction de diminution de débit de gaz d'échappement, et lorsque la température (Tf) du filtre à particules (11) reste supérieure à la température de référence (Tf0) pendant une période plus courte que la période de référence (Δtbase), le moyen de réduction de diminution de débit de gaz d'échappement est empêché d'être mis en oeuvre.

2. Dispositif de maîtrise des gaz d'échappement destiné à un moteur à combustion interne selon la revendication 1, **caractérisé en ce qu'**il comprend en outre :
un moyen de détection de quantité de dépôt de matières particulaires destiné à détecter une quantité de matières particulaires (PM) déposées dans le filtre à particules (11), où la période de référence (Δtbase) est établie pour être plus courte, lorsque la quantité des matières particulaires (PM) déposées dans le filtre à particules (11) détectée par le moyen de détection de quantité de dépôt de matières particulaires devient plus importante, lorsque la température (Tf) du filtre à particules (11) dépasse la température de référence (Tf0).

3. Dispositif de maîtrise des gaz d'échappement destiné à un moteur à combustion interne selon la revendication 1 ou 2, **caractérisé en ce que** la période de référence (Δtbase) est établie pour être plus courte, à mesure que la température (Tf) du filtre à particules (11) détectée par le moyen de détection de température de filtre (16) devient élevée, lorsque la température (Tf) du filtre à particules (11) dépasse la température de référence (Tf0).

4. Procédé de maîtrise des gaz d'échappement d'un dispositif de maîtrise des gaz d'échappement destiné à un moteur à combustion interne, lequel comprend un filtre à particules (11) qui est disposé dans un conduit d'échappement (9) d'un moteur à combustion interne (1) de façon à capturer les matières particulaires (PM) dans le gaz d'échappement, le procédé de maîtrise des gaz d'échappement comprenant les étapes consistant à détecter une température (Tf) du filtre à particules (11), détecter la décélération d'un véhicule et réduire une diminution du débit des gaz d'échappement circulant dans le filtre à particules (11), **caractérisé en ce que**
dans le cas où la décélération du véhicule est détectée tandis que la température (Tf) du filtre à particules (11) est supérieure à une température de référence (Tf0), lorsque la température (Tf) du filtre à particules (11) reste supérieure à la température de référence (Tf0) pendant une période de référence (Δtbase) ou plus, la diminution du débit du gaz d'échappement circulant dans le filtre à particules (11) est réduite, et lorsque la température (Tf) du filtre à particules (11) reste supérieure à la température de référence (Tf0) pendant une période plus courte que la période de référence (Δtbase), la réduction de la diminution du débit du gaz d'échappement circulant dans le filtre à particules (11) est empêchée.

5. Procédé de maîtrise des gaz d'échappement du dispositif de maîtrise des gaz d'échappement destiné à un moteur à combustion interne selon la revendication 4, **caractérisé en ce qu'**il comprend en outre
une étape consistant à détecter une quantité de matières particulaires (PM) déposées dans le filtre à particules (11), et où
la période de référence (Δtbase) est établie pour être plus courte à mesure que la quantité détectée des matières particulaires (PM) déposées dans le filtre à particules (11) devient plus importante lorsque la température (Tf) du filtre à particules (11) dépasse la température de référence (Tf0).

6. Procédé de maîtrise des gaz d'échappement du dispositif de maîtrise des gaz d'échappement destiné à un moteur à combustion interne selon la revendication 4 ou 5, **caractérisé en ce que** la période de référence (Δtbase) est établie pour être plus courte à mesure que la température (Tf) du filtre à particules (11) devient plus élevée lorsque la température (Tf) du filtre à particules (11) dépasse la température de référence (Tf0) .
